# EUROPEAN PATENT SPECIFICATION

(11) **EP 0 776 611 B1**
(45) Date of publication and mention of the grant of the patent: **30.01.2002**
(21) Application number: 96307929.8
(22) Date of filing: 31.10.1996
(51) Int. Cl.: A23L 1/317, A23L 1/314, A23B 4/12, A23B 4/22

(54) **Fermented and pre-fermented protein based meat products**
Fermentierte und vorfermentierte Fleischprodukte auf Proteinbasis
Produits de viande fermentés et préfermentés à base de protéines

(30) Priority: 01.12.1995 EP 95308785
(43) Date of publication of application: 04.06.1997
(73) Proprietor: UNILEVER PLC, London EC4P 4BQ (GB); UNILEVER N.V., 3013 AL Rotterdam (NL)
(72) Inventor: Bishop, Kevin John, Rushden, Northamptonshire NN10 9EJ (GB); Fletcher, Brian Charles, Sharnbrook, Bedfordshire MK44 1JP (GB); Scott, Glenda Lesley, Rushden, Northamptonshire NN10 9HP (GB); Stewart, William John, Wellingborough, Northamptonshire NN9 5SY (GB); Tansey, Fergal Sean, Bedford MK40 3PN (GB)
(74) Representative: Elliott, Peter William

(56) References cited:
- EP-A- 0 029 503
- EP-A- 0 058 856
- EP-A- 0 586 939
- DE-A- 3 008 650
- DE-A- 4 035 836
- PATENT ABSTRACTS OF JAPAN vol. 011, no. 300 (C-449), 29 September 1987 & JP 62 091163 A (KUREHA CHEM IND CO LTD), 25 April 1987,
- DATABASE WPI Week 8515 Derwent Publications Ltd., London, GB; AN 85-091764 XP002000196 & SU 1 114 388 A (VOSTOCH SIBIRSK TEKH INST) , 23 September 1984
- PATENT ABSTRACTS OF JAPAN vol. 018, no. 111 (C-1170), 23 February 1994 & JP 05 304889 A (AIZU TENPOU JOZO KK), 19 November 1993, & DATABASE WPI Week 9351 Derwent Publications Ltd., London, GB; AN 93-408259 & JP 05 304 889 A (AIZU TENPO JOZO KK) , 19 November 1993

## Description

### Field of Invention

This invention relates to fermented, protein-based meat products and concerns a process for the production of such products and the resulting edible products.

### Background to the Invention

Fermented, meat-based products such as salami and sausage have been widely produced for many years. In a typical process for producing such products, finely divided meat and spices are fermented with lactic acid-producing bacteria to reduce pH in order to prevent subsequent undesired bacterial growth, followed by drying and optional smoking and cooking steps. Processing typically takes many days. The fermentation and drying have a preserving effect, so that the product has a relatively long life (many months) under ambient conditions.

From DE 3008650 a one-step process is known for the fermentation of meat products wherein a specific microorganism (Pedioccocus pentosaceus ATCC 10791) must be applied.The temperature used during this fermentation is between 10 and 26.7 oC.This process still is rather slow , while the quality of the resulting products is not always optimal. EP 586 939 concerns the preparation of a sausage type of product that contains soft cheese.From this document it cannot be derived how a meat product can be made in a quick two step process.

SU 1 114 388 discloses a sour cream type lactic product wherein a milk base is cooled and prefermented, whereupon fat is added and the preferment is further fermented and packed.This document thus does not reveal a process applicable for meat type products.

JP 05 304 889-A concerns a process for making immature cheese curd by fermenting soybeans and milk with rennet,whereupon enzyme and salt are added and the material is matured.Thus again this document does not indicate how a good quantity meat product can be made in a relatively short time.

EP 29 503 discloses the preparation of a tangy flavoured comminuted meat product by adding to meat a liquid or dry cultured dairy product.From this document nothing can be derived about how to make in a short time a good quality meat product.

An aim of the present invention is to provide a process capable of more rapid production of fermented, protein-based meat products, particularly a process having a shorter fermentation step, than has hitherto been possible, without compromising the quality or microbiological safety of the product.

The present inventors have found that by adopting a pre-fermentation step, the length of the subsequent fermentation step can be reduced.

### Summary of the Invention

According to one aspect of the present invention there is provided a process for producing a fermented, protein-based meat product comprising mixing finely divided proteinaceous meat material and at least a starter culture comprising acid-producing bacteria, optionally in the presence of other ingredients by first performing a pre-fermentation step at a temperature of 2 to 10°C on a first part, representing 10 to 70 wt % of the total amount of proteinaceous meat material plus other ingredients required for the whole process, whereupon the remainder of the proteinaceous meat material and other ingredients are added; to the preferment obtained as result of the prefermentation, whereupon a fermentation is carried out on this mixture at a temperature of 25 to 42°C.

It was found that the pre-fermentation step of the invention, which involves treatment of the mixture prior to fermentation, allows the starter culture to adapt to the ingredients being used, and in particular to adapt to the concentration of salts (typically about 3 % by weight, predominantly sodium chloride), in such a way that the culture performs more efficiently in the subsequent fermentation step and acts to reduce pH more rapidly in the fermentation step than would otherwise be the case. The fermentation step can thus be shorter in duration than is conventional.

The starter culture may comprise a conventional starter culture as is currently used in the fermentation step of conventional processes. The culture comprises at least one acid-producing bacteria, particularly lactic acid-producing bacteria of which *Pediococci* and *Lactobacilli* are the main species. Good results have been obtained using *Pediococcus pentosaceus*. The culture may also comprise one or more bacteria included for flavouring and/or colouring purposes, eg *Micrococci* or *Staphylococci*. Good results in terms of quality and flavour of end product have been obtained with a starter culture comprising a mixture of equal amounts by weight *Pediococcus pentosaceus* and *Staphylococcus carnosus*. The starter culture is conveniently present in an amount of at least 10⁷ cfu (colony forming units) for each gram of other ingredients.

The pre-fermentation step is preferably carried out at a temperature of ≤4°C. Pre-fermentation is conveniently carried out by placing the mixture in trays in a refrigerator.

The pre-fermentation step is conveniently carried out for a period of at least 24 hours, and generally for a period of less than 72 hours. To an extent, the longer the pre-fermentation step, the quicker can be the subsequent fermentation step. Generally a pre-fermentation step of about 24 hours is preferred, as this provides adequate reduction in the fermentation step for overall shortening of processing time as compared with conventional processes. Although increasing the pre-fermentation time enables reduction in the fermentation time, the reduction is less than the increase so that overall processing is prolonged. There are nevertheless some circumstances in which it will be convenient to adopt a pre-fermentation step of over 24 hours. For example, where processing takes place on weekdays only and not at weekends, ingredients can to advantage be allowed to pre-ferment over a weekend, to be ready for a shorter than usual fermentation step after the weekend.

The pre-fermentation step is preferably carried out on a portion, conveniently in the range 10 to 70% and typically about 50% (by weight), of the proteinaceous meat material and other ingredients to be processed, with the balance of the ingredients being added after pre-fermentation and before the fermentation step. The pre-fermentation is preferably carried out on material that is substantially fat-free. Thus, where the proteinaceous material comprises meat, lean meat is preferably used in the pre-fermentation step, with fat being added subsequently. All of the starter culture is desirably added before the pre-fermentation step.

The ingredients used may be generally conventional, and typically comprise a finely divided (eg chopped or ground) mixture of pork and beef, including fat, generally pork fat, with added preservatives and spices. The mixture preferably comprises 20-30% by weight of fat. Spices may include, for example, garlic powder, coriander seed powder and white pepper powder. Preservatives may include, for example, sodium chloride, sodium nitrite and sodium ascorbate. Glucose (typically 0.4%) or similar material is generally present as energy supply for the starter culture.

After pre-fermentation and prior to fermentation the complete ingredients are conveniently put into casings. This can be readily achieved in known manner, eg using a vacuum stuffer, with automatic formation of links of desired size and shape.

The final temperature of the mix prior to extrusion into casings is preferably in the range -4 to -6°C. It is for this reason that fat is desirably added in frozen condition.

If the temperature of the mix prior to extrusion is higher than -4°C, smearing of fat during case extrusion will occur, which is a result of fat particles melting and being forced to the product surface, and, as a result of smearing, case hardening can occur during the subsequent drying stage, resulting in an unacceptably greasy product.

If the temperature of the mix prior to extrusion is lower than -6°C, the soluble protein on the surface of particles of, eg, meat and fat will be unable to stick the particles together and so particle binding will not occur, resulting in a product with a crumbly texture, which is undesirable.

During the subsequent fermentation step, the acid-producing bacteria, eg *Pediococci*, produce acid (for example *Pediococcus pentosaceus* utilises glucose to produce lactic acid), thus causing a reduction of product pH. Fermentation is continued until pH is reduced to a desired, sufficient extent. Typical pH reduction is from about pH 6 to pH ≤4.8. Fermentation can be monitored by monitoring pH. Fermentation may be carried out in generally conventional manner, typically being performed at about 25°C. Preferably, however, fermentation is carried out at comparatively high temperatures, in the range 37-42°C, typically at about 40°C. At such temperatures, fermentation times of in the range 10 to 15 hours, eg. about 12 hours, are generally sufficient to bring about the desired reduction in pH, with the exact time required depending on factors including the pre-fermentation time and starter culture age. Reduction in pH causes product firmness and changes in flavour and/or colour.

Fermentation is generally followed by a drying step, during which a quantity of the water phase is removed, generally as rapidly as possible without causing fat run or case hardening. The aim is typically to reduce product weight by between 30 -34% by exposing the product to different humidities and air flows. In this way the water activity (a_{w}) of the product is reduced to a desired degree, and typically a_{w} of ≤0.87 is obtained after drying. The drying process gives the product structure and a level of microbiological stability. The drying process may be generally conventional, and a range of different drying regimes may be used, as is known in the prior art. Good results have been obtained by drying at 22°C for up to 60 hours, until suitable reduction in a_{w} is obtained.

Drying may be accompanied by optional smoking, which may be carried out in generally conventional manner, for flavouring.

After drying, the product is conveniently packed, possibly individually, eg. by being nitrogen or vacuum packed in foil wrapping, resulting in a sealed pack containing the product in an atmosphere of nitrogen or in the absence of oxygen.

The packed product may optionally be pasteurised in conventional manner, eg. in a water bath system at atmospheric pressure at 70°C for at least 2 minutes, or in a retort under pressure greater than atmospheric at 70°C for at least 2 minutes. Alternatively, raw product is quarantined for a suitable period, eg. at least 30 days at a temperature in the range 18 - 22°C, prior to release for consumption.

The process can result in production of a fermented, dried, ambient stable ready-to-eat (raw or cooked) protein-based product. The product can have a shelf life of up to 6 months when stored unopened under normal ambient conditions.

In a further aspect the present invention provides a fermented protein-based product produced by the process of the invention.

The product may be produced in a range of different sizes and shapes as desired, and conveniently is in the form of an individually foil wrapped salami sausage having a weight of about 25g, a length of about 180mm and a diameter of about 10mm.

The process of the invention is designed with microbiological considerations in mind, with the aim of ensuring product safety.

### Safety with respect to Staphylococcus aureus

*S. aureus* is regularly found in fermented meat products and has been implicated in several food poisoning outbreaks especially in the US. In fermented product *S. aureus* is a poor competitor at low temperatures, low pH values, low a_{w}, in the presence of lactics and other micrococci, and under anaerobic conditions.

It has been shown that the initial pH value and the initial activity of the lactic acid bacteria are critical for the control of *S. aureus*. The maximum growth rate of the pathogen is at temperatures between 40 and 46°C. Fermentation temperatures up to 26°C will control growth of the organism. Fermentation temperatures up to 43°C are usual in the manufacture of semi-dry sausages in the US and so rapid drop in pH in the sausages early in fermentation is essential for inhibition of the organism. The production of peroxidases by lactic acid bacteria will also inhibit the growth of *S*. *aureus*.

Work done by the Applicants indicates that the preferred high temperature fermentation process of 40°C is very safe with respect to control of *S. aureus* in product. The addition of starter culture to the pre-fermentation stage allows adaption of the starter culture to the salt and meat environment, prevents growth of *S. aureus* and results in slightly faster pH drop during the subsequent fermentation than when there is no pre-fermentation stage. Fermentation pH drop from ≤ 6.0 to ≤4.8 after 10h at 40°C, results in > 1 log reduction in *S. aureus* numbers and prevents subsequent growth at 40°C even when the fermentation time is extended to 24h. Drying of product to a_{w} ≤0.87 also prevents growth as the organism does not grow below this a_{w}.

*S. aureus* produces pathogenic enterotoxin when levels in meat mix exceed 10⁷ cfu/g, but there is very little risk of this occuring. No toxin was detected at any stage during any of the fermentations carried out even when levels exceeded 5 x 10⁴ cfu/g product. Toxin production was only recorded at > 10⁷ cfu/g when the 40°C fermentation exceeded 12h without starter cultures, but the toxin levels recorded were below the minimum levels required for food poisoning.

### Safety with respect to Salmonella, Eshcerichia coli 0157, other Enterobacteriaceae and Listeria monocytogenes

The process parameters which control *S. aureus* will also control other high risk pathogens such as *Salmonella, Enterobacteriaceae* and *L. monocytogenes*. These micro-organisms are also poor competitors at low pH value, greater than 2% salt concentration and greater than 40ppm added sodium nitrite. Drying of product to a_{w} ≤0.93 prevents growth of these vegetative pathogens.

The other high risk pathogen of concern in the product is *E. coli* O157. The organism can produce enterotoxin if ingested which causes haemorrhagic colitis (HC) and haemolytic uraemic syndrome (HUS) in humans. There have been reported outbreaks of this pathogen associated with unpasteurised sliced salami products. The organism has been reported to survive for 8 weeks in unpasteurised fermented meat product if present in sufficient numbers, ie. 10⁴ cfu/g, in raw materials.

The organism is not as heat resistant as *L. monocytogenes*, so the preferred pasteurisation process will destroy it.

### Safety with respect to Clostridium botulinum

The risk of *Cl. botulinum* growing in the product is very small. There is no epidemiological evidence that *clostridia* can grow and form toxins during fermentation and storage of salami sausages. *C. botulinum* growth is controlled by low pH and low a_{w} (<0.93).

### Pasteurisation

The product preferably receives a minimum integrated pasteurisation process of 70°C for 2 minutes.

Thermal death studies by the Applicants have demonstrated that the pasteurisation process used will ensure a minimum 7 log reduction in all potential vegatative pathogens in product.

The invention will be further described, by way of illustration, in the following Example.

### Example

A fermented, dried, pasteurised, nitrogen packed, ready-to-eat, ambient stable salami sausage was produced using the following raw materials:

| **Ingredient** | **%** | **Storage** |
|---|---|---|
| Pork (local abattoir) | 27.1 | - frozen (<6 months, factory) |
| Pork backfat (local abattoir) | 27 | - frozen (<6 months, factory) |
| Frozen Beef (local abattoir) | 24 | - frozen (<6 months, factory) |
| Unfrozen Beef (local abbatoir) | 18 | - chill (2 days, factory) |
| (pH of all the above ≤6.0) | | |
| Starter culture | | - frozen (<-20°C, <3 months) |
| *Pediococcus pentosaceus* | 0.07 | |
| *Staphylococcus carnosus* | 0.07 | |
| Spices: | | |
| garlic (powder) | 0.02 | - ambient (dry store) |
| coriander seed (powder) | 0.05 | - ambient (dry store) |
| white peppers (powder) | 0.29 | - ambient (dry store) |
| Glucose | 0.4 | - ambient (dry store) |
| Sodium chloride | 2.91 | - ambient (dry store) |
| Sodium nitrite | 0.014 | - ambient (dry store) |
| Sodium ascorbate | 0.06 | - ambient (dry store) |
| Plastic casings | - | - ambient (dry store) |
| Foil wrapper | - | - ambient (dry store) |

### 1. Pre-fermentation

Approximately 50% of the lean meats (containing about 3% fat) were ground up with approximately 50% of the sodium nitrite, sodium chloride and glucose and the full amount of the starter culture. This salted lean phase was placed in trays and held at about 4°C in a refrigerator for at least 24 hrs. This period can be extended because of weekend working, as explained above.

### 2. Blending and Stuffing

The pre-fermented lean phase was blended with the balance of frozen meat and fat and all remaining ingredients. This is normally done in a bowl chopper but other forms of reducers/blenders can be used. The final temperature of the mixture prior to extrusion into casings is in the range -4 to -6°C. This mixture then goes to a stuffer for putting into casings and linking in conventional manner. The product is located on racks.

### 3. Fermentation

The racks are transferred to a fermentation chamber and fermentation is done at a temperature of about 40°C for up to 12 hours. During this time the lactic acid-producing bacteria utilise the glucose, producing lactic acid causing a reduction of the product pH from about pH 6 to pH≤4.8. Fermentation can be monitored by monitoring pH. Fermentation causes product firmness and a change in flavour and/or colour.

### 4. Drying

The fermented product is transferred to a drying chamber, where drying is carried out at a temperature of about 22°C for a period of up to 60 hours. During drying the product weight is reduced by between 30 and 34% as a result of exposure to a range of humidities and air flows. This reduces the a_{w} of the product to ≤0.87, giving the product structure and a level of microbiological stability. Optional smoking may be carried out at the same time as fermentation in generally conventional manner, for flavouring.

### 5. Packing and Pasteurisation

Finished product is packed by being individually foil wrapped under nitrogen and is pasteurised in pack at 70°C for at least 2 minutes.

The process results in production of a fermented, dried, pasteurised, nitrogen packed, ready-to-eat, ambient stable salami sausage, that is individually packed in foil wrapping. The product has pH≤5.3, a_{w} ≤0.87, salt ≥ 4.0% (≥17%SOW (salt-on-water)) and nitrite (residual) > 10ppm. The product is microbiologically safe and can be stored, unopened, under normal ambient conditions for up to 6 months.

A conventional embodiment is in the form of an elongate salami sausage, having a weight of about 25g, a length of about 180mm and a diameter of about 10mm. Other sizes and shapes can clearly also be produced.

## Claims

1. Process of producing a fermented, protein-based product by fermenting a mixture of finely divided proteinaceous meat material and at least a starter culture, comprising acid forming bacteria, and optionally in the presence of other ingredients by first performing a prefermentation at a temperature of 2 to 10 °C on a first part, representing 10 to 70 wt% of the total amount of proteinaceous meat material plus other ingredients required for the whole process whereupon the remainder of the proteinaceous meat material and other ingredients are added to the preferment obtained as result of the prefermentation whereupon a fermentation is carried out on this mixture at a temperature of 25 to 42 °C.

2. A process according to claim 1, wherein the starter culture comprises a mixture of *Pediococcus pentosaceus* and *Staphylococcus carnosus.*

3. A process according to claim 1 or 2, wherein the pre-fermentation step is carried out at a temperature of ≤4°C.

4. A process according to claim 1, 2 or 3, wherein the pre-fermentation step is carried out for a period of at least 24 hours.

5. A process according to any one of the preceding claims, wherein the pre-fermentation step is carried out on an amount of about 50% (by weight) of proteinaceous meat material and other ingredients to be processed.

6. A process according to any one of the preceding claims, wherein the ingredients comprise a finely divided mixture of pork and beef, including fat, with added preservatives and spices.

7. A process according to any one of the preceding claims, wherein fermentation is carried out at a temperature in the range 37 - 42°C, typically at about 40°C, for a time in the range 10 to 15 hours, eg. about 12 hours.

8. A process according to any one of the preceding claims, wherein fermentation is followed by a drying step.

9. A process according to claim 8, wherein drying is followed by either a pasteurisation step or a quarantine step.

## Patentansprüche

1. Verfahren zur Herstellung eines fermentierten Produkts auf Protein-Basis durch Fermentieren eines Gemisches aus feinzerkleinertem proteinhaltigem Fleischmaterial und mindestens einer Starterkultur, die säurebildende Bakterien umfaßt, gegebenenfalls in Gegenwart anderer Ingredienzien, wobei zuerst eine Vorfermentierung bei einer Temperatur von 2 bis 10°C mit einem ersten Teil durchgeführt wird, der 10 bis 70 Gew.-% der Gesamtmenge des proteinhaltigen Fleischmaterials und der anderen Ingredienzien, die für das ganze Verfahren notwendig sind, darstellt, wonach der Rest des proteinhaltigen Fleischmaterials und der anderen Ingredienzien zu dem vorfermentierten Produkt, das als Resultat der Vorfermentierung erhalten wurde, gegeben wird, wonach mit diesem Gemisch eine Fermentierung bei einer Temperatur von 25 bis 42°C durchgeführt wird.

2. Verfahren nach Anspruch 1, wobei die Starterkultur ein Gemisch aus *Pediococcus pentosaceus* und *Staphylococcus carnosus* umfaßt.

3. Verfahren nach Anspruch 1 oder 2, wobei der Vorfermentierungsschritt bei einer Temperatur von ≤4°C durchgeführt wird.

4. Verfahren nach Anspruch 1, 2 oder 3, wobei der Vorfermentierungsschritt über einen Zeitraum von mindestens 24 h durchgeführt wird.

5. Verfahren nach einem der vorangehenden Ansprüche, wobei der Vorfermentierungsschritt mit einer Menge von etwa 50 Gew.-% des proteinhaltigen Fleischmaterials und der anderen Ingredienzien, die verarbeitet werden sollen, durchgeführt wird.

6. Verfahren nach einem der vorangehenden Ansprüche, wobei die Ingredienzien ein feinzerkleinertes Gemisch aus Schwein und Rind, einschließlich Fett, mit zugesetzten Konservierungsmitteln und Gewürzen umfassen.

7. Verfahren nach einem der vorangehenden Ansprüche, wobei die Fermentierung bei einer Temperatur im Bereich von 37 bis 42°C, typischerweise bei etwa 40°C für eine Zeit im Bereich von 10 bis 15 Stunden, z.B. etwa 12 Stunden, durchgeführt wird.

8. Verfahren nach einem der vorangehenden Ansprüche, wobei auf die Fermentierung ein Trocknungsschritt folgt.

9. Verfahren nach Anspruch 8, wobei auf die Trocknung ein Pasteurisierungsschritt oder Quarantäneschritt folgt.

## Revendications

1. Procédé pour produire un produit à base de protéine, fermenté en faisant fermenter un mélange de matière protéinique finement divisée et au moins une culture d'amorçage, comprenant des bactéries productrices d'acide et, éventuellement en présence d'autres ingrédients, en réalisant d'abord une préfermentation à une température comprise entre 2°C et 10 °C sur une première partie, représentant 10% à 70% en poids de la quantité totale de la matière carnée protéinique plus d'autres ingrédients requis pour l'ensemble du procédé, après quoi le reste de la matière carnée protéinique et d'autres ingrédients sont ajoutés au produit préfermenté obtenu en résultat de la préfermenation après quoi une fermentation est réalisée sur ce mélange à une température comprise entre 25°C et 42°C.

2. Procédé selon la revendication 1, dans lequel la culture d'amorçage est composée d'un mélange de *Pediococcus pentosaceus* et de *Staphylococcus carnosus.*

3. Procédé selon la revendication 1 ou 2, dans lequel l'étape de préfermentation est réalisée à une température inférieure ou égale à 4°C.

4. Procédé selon la revendication 1, 2 ou 3, dans lequel l'étape de préfermentation est réalisée pendant une durée d'au moins 24 heures.

5. Procédé selon l'une des quelconques revendications précédentes, dans lequel l'étape de préfermentation est réalisée sur une quantité d'environ 50% (en poids) de matière carnée protéinique et d'autres ingrédients à traiter.

6. Procédé selon l'une des quelconques revendications précédentes, dans lequel les ingrédients sont composés d'un mélange de porc et de boeuf finement divisé, comprenant des matières grasses avec des agents de conservations et des épices.

7. Procédé selon l'une des quelconques revendications précédentes, dans lequel la fermentation est réalisée à une température comprise entre 37°C et 42°C, typiquement à environ 40°C, pendant une durée comprise entre 10 et 15 heures, par exemple 12 heures.

8. Procédé selon l'une des quelconques revendications précédentes, dans lequel la fermentation est suivie par une étape de séchage.

9. Procédé selon la revendication 8, dans lequel le séchage est suivi soit par une pasteurisation soit par une étape de mise en quarantaine.
